Europäisches Patentamt

European Patent Office

Office européen des brevets

(19)

(11) Veröffentlichungsnummer: **0 109 522**
**B1**

(12) **EUROPÄISCHE PATENTSCHRIFT**

(45) Veröffentlichungstag der Patentschrift:
08.01.86

(51) Int. Cl.⁴: **H 02 M 7/515, H 02 M 5/45**

(21) Anmeldenummer: **83109994.0**

(22) Anmeldetag: **06.10.83**

(54) **Wechselrichter für einen Parallel-Schwingkreis-Umrichter.**

(30) Priorität: **12.10.82 DE 3237716**

(43) Veröffentlichungstag der Anmeldung:
**30.05.84 Patentblatt 84/22**

(45) Bekanntmachung des Hinweises auf die Patenterteilung:
**08.01.86 Patentblatt 86/2**

(84) Benannte Vertragsstaaten:
**AT BE CH DE FR GB IT LI LU NL SE**

(56) Entgegenhaltungen:
**DE - A - 2 352 473**
**DE - A - 2 632 090**

**ELEKTRIE, Band 27, Nr. 11, 1973, H. GÜLDNER,**
**"Schwingkreisumrichter für die induktive Erwärmung",**
**Seiten 586-593**
**Patent Abstracts of Japan, Band 4, Nr. 137, 25.**
**September 1980, Seite 66E27**

(73) Patentinhaber: **AEG - Elotherm GmbH, Hammesberger**
**Strasse 31, D-5630 Remscheid-Hasten (DE)**

(72) Erfinder: **Matthes, Hans Georg, Dipl.-Ing.,**
**Lucasstrasse 7, D-5632 Wermelskirchen (DE)**
Erfinder: **Wittenbecher, Hasso, Dipl.-Ing.,**
**Brückenstrasse 16, D-5630 Remscheid (DE)**

(74) Vertreter: **Patentanwaltsbüro Cohausz & Florack,**
**Schumannstrasse 97, D-4000 Düsseldorf 1 (DE)**

# Beschreibung

Die Erfindung bezieht sich auf einen Wechselrichter aus in Brückenschaltung angeordneten Thyristoren mit einem als Parallel-Schwingkreis ausgebildeten Lastkreis, bei dem für die Thyristoren eine Löschzeit-Regeleinrichtung vorgesehen ist.

Wechselrichter dieser Art sind bekannt. Sie werden vor allem in Umrichtern eingesetzt. In solchen Umrichtern wird der in der Regel mehrphasige Wechselstrom in einem aus mehreren Zweigen bestehenden, thyristorisierten Gleichrichter gleichgerichtet und über eine Glättungsdrossel dem Wechselrichter zugeführt. Damit in den Diagonalen des Wechselrichters eine Kommutierung durch die Thyristoren möglich ist, muss der Wechselrichter mit einer Frequenz betrieben werden, die höher ist als die Resonanzfrequenz des als Parallel-Schwingkreis ausgebildeten Lastkreises, weil nur unter dieser Bedingung die für die Thyristoren charakteristische Mindest-Thyristor-Löschzeit eingehalten werden kann. Die Löschzeit ist dabei zumindest in der Nähe der Resonanzfrequenz umso grösser, je mehr die durch die steuerbare Frequenz der Zündimpulse bestimmte Wechselrichterfrequenz die Resonanzfrequenz übersteigt. Andererseits sinkt die die Leistung des Wechselrichters bestimmende Wechselrichterspannung umso mehr ab, je mehr die Wechselrichterfrequenz sich von der Resonanzfrequenz zu höheren Frequenzen entfernt. Deshalb ist man bestrebt, den Wechselrichter möglichst in einem Zustand zu betreiben, in dem die Löschzeit nur wenig von der Mindestlöschzeit abweicht.

Um dieses Ziel zu erreichen, ist es bekannt, dem die Zündimpulse an die Thyristoren abgebenden Zündimpulsgenerator eine Löschzeit-Regeleinrichtung zuzuordnen, die als Ist-Wert für die Löschzeit die Zeit des negativen Spannungszipfels der Thyristorspannung erfasst. Sofern die Löschzeit-Regeleinrichtung den Zündimpuls-Generator exakt nach diesem Ist-Wert steuert, ist nicht gewährleistet, dass die Thyristoren mit der maximal möglichen Leistung betrieben werden, weil die Zeit des negativen Spannungszipfels kleiner als die sich aus der Summe der Schonzeit und Freiwerdezeit ergebende tatsächliche Löschzeit ist. Neben dieser nicht exakten Freiwerdezeit-Erfassung für den Ist-Wert ist weiter von Nachteil, dass der für die Ist-Wert-Bestimmung herangezogene Spannungszipfel bei kleiner Thyristorspannung einen zu kleinen Störspannungs-Abstand hat.

Der Erfindung liegt die Aufgabe zugrunde, einen Wechselrichter mit einer Steuereinrichtung zu schaffen, bei dem der Löschzeit-Ist-Wert für die Löschzeitregelung exakt erfasst wird.

Diese Aufgabe wird erfindungsgemäss dadurch gelöst, dass ein Integrator für eine lineare Integration vorgesehen ist, der von dem an die Thyristoren gelieferten Zündsignal einer aufkommunierenden Diagonalen der Brückenschaltung gestartet wird, dessen Integrationsrichtung beim Null-Durchgang des Stromes in dieser Diagonalen umgekehrt wird, wobei der Absolutwert der Integrationsgeschwindigkeit beibehalten wird, und dessen Integration beim Null-Durchgang der Spannung der genannten Diagonalen gestoppt wird, und dass der Integrationswert am Ende der Integration der Löschzeit-Regeleinrichtung als Ist-Wert für die Löschzeit zugeführt wird.

Anders als bisher werden die Signale für die Erfassung der Ist-Zeit nicht von einem Thyristor unmittelbar abgeleitet, sondern vom Lastkreis. Durch die Integration mit positivem und anschliessend negativem Vorzeichen bei gleicher Integrationsgeschwindigkeit erhält man exakt den verdeckten Null-Durchgang des Stromes in den Thyristoren der Diagonalen. Durch die lineare Integration, angefangen von diesem Null-Durchgang bis zu dem Null-Durchgang der Spannung im Lastkreis, erhält man einen exakten Ist-Wert für die erforderliche Freiwerdezeit.

Im folgenden wird die Erfindung anhand einer Zeichnung näher erläutert. Im einzelnen zeigen

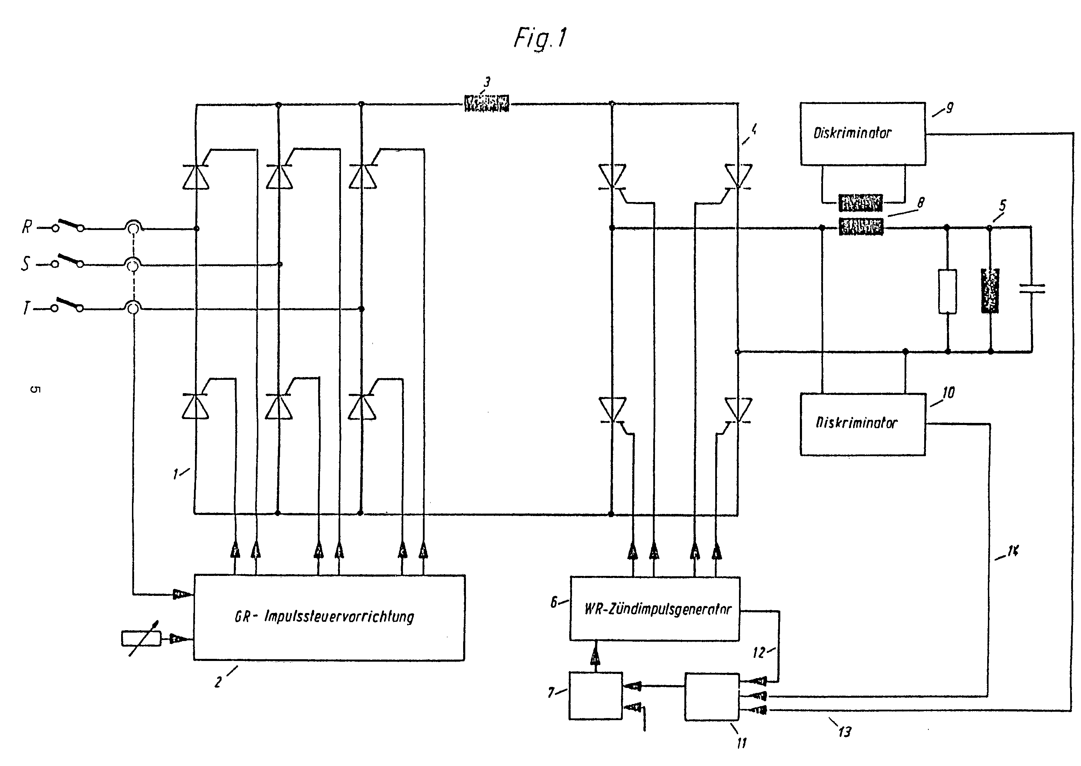

Fig. 1 ein Schaltungsdiagramm eines Parallel-Schwingkreis-Umrichters,

Fig. 2 ein Diagramm für den Strom und die Spannung eines Thyristors während des Umrichterbetriebes,

Fig. 3 ein Diagramm für den Strom und die Spannung in einer Diagonalen des Wechselrichters bzw. im Lastkreis und

Fig. 4 ein Spannungs-Diagramm für den Integrator.

Ein Parallel-Schwingkreis-Umrichter besteht aus einem von einem Drehstromnetz gespeisten Gleichrichter 1, dem ein Strom- und Spannungsregler 2 zugeordnet ist, einer Glättungsdrossel 3 und einem Wechselrichter 4. Sowohl der Gleichrichter 1 als auch der Wechselrichter 4 sind thyristorisiert.

Ein als Parallel-Schwingkreis ausgebildeter Lastkreis 5 ist an der Brückenschaltung des Wechselrichters 4 derart angeschlossen, dass der Lastkreis 5 wechselweise von den Diagonalen des Wechselrichters 4 mit Strom versorgt wird. Die den Zündelektroden der Thyristoren des Wechselrichters 4 zugeführten, die Umkommutierung einleitenden Zündimpulse werden von einem Zündimpuls-Generator 6 geliefert, der von einer Löschzeit-Regeleinrichtung 7 eingestellt wird.

Der trapezförmige Frequenzstrom $i_w$ im Lastkreis 5 wird über einen Stromwandler 8 einem Diskriminator 9 zugeführt, der beim Null-Durchgang des Stromes $i_w$ an seinem Ausgang einen Steuerimpuls abgibt. Mittels eines weiteren Diskriminators 10, der am Lastkreis 5 angeschlossen ist, wird der Spannungs-Null-Durchgang der sinusförmigen Frequenzspannung $u_w$ ermittelt. Dieser Diskriminator 10 gibt bei Null-Durchgang der Spannung $u_w$ am Lastkreis 5 ebenfalls einen Steuerimpuls ab. Diese Steuerimpulse und ein von den an die Thyristoren des Wechselrichters 4 gelieferten Zündimpulsen abgeleiteter Steuerimpuls werden einem Integrator 11 für eine lineare Ab- und Aufintegration zugeführt. Der Integrator 11 liefert das Ist-Wertsignal für die Löschzeit an die Löschzeit-Regeleinrichtung 7. Ausserdem erhält die Löschzeit-Regeleinrichtung 7 ein Soll-Wertsignal.

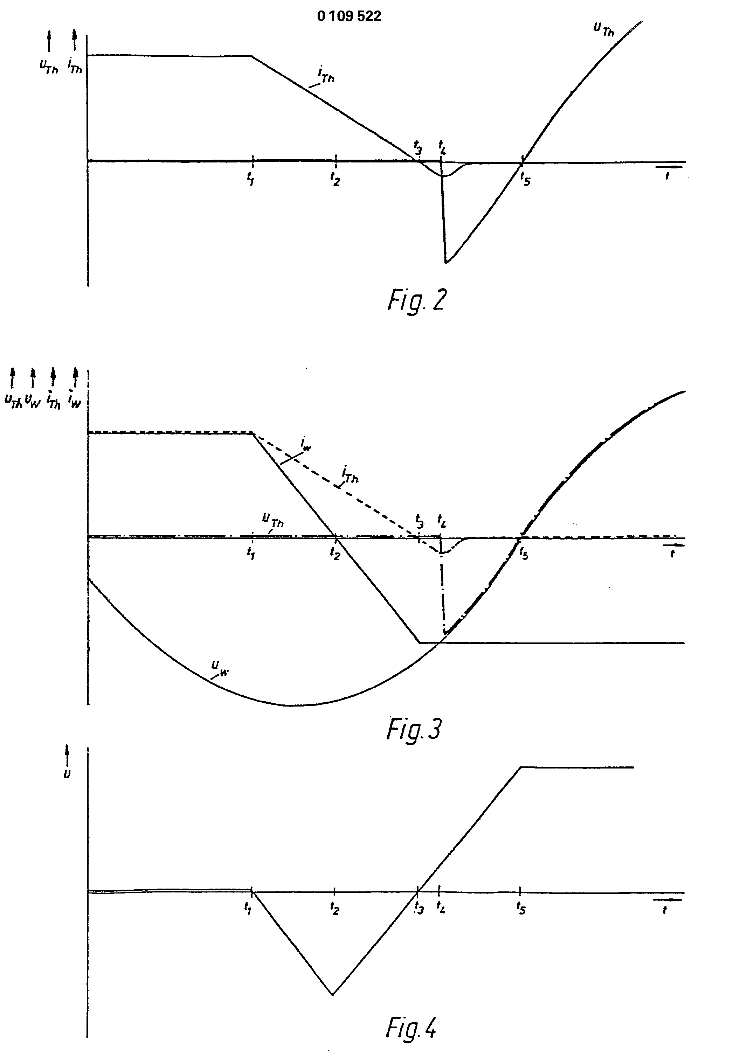

In Fig. 2 ist der Strom- und Spannungsverlauf für einen Thyristor dargestellt. In der Zeit bis $t_1$ führt der Thyristor Strom. Die Spannung am Thyristor ist in dieser Zeit Null. Zum Zeitpunkt $t_1$ wird an die Thyristoren der Gegendiagonalen vom Zündimpuls-Generator 6 ein Zündimpuls geliefert, wodurch die Umkommutierung des Wechselrichters 4 eingeleitet wird. Der Strom $i_{Th}$ im Thyristor fällt bis zur Zeit $t_3$ auf Null und weiter bis zur Zeit $t_4$ auf einen negativen Wert ab, um dann allmählich Null zu werden. Die Spannung $u_{Th}$ am Thyristor ist bis zum Zeitpunkt $t_4$ Null. Zum Zeitpunkt $t_4$ springt sie auf einen maximalen negativen Wert, um dann sinusförmig bis ins positive anzusteigen. Der Null-Durchgang der Spannung $u_{Th}$ liegt bei $t_5$.

In Fig. 3 ist der Strom $i_{Th}$ eines Thyristors und die zugehörige Spannung $u_{Th}$ gestrichelt bzw. strichpunktiert noch einmal dargestellt, um den zeitlichen Zusammenhang mit dem zu messenden Strom $i_w$ und der zu messenden Spannung $u_w$ im Lastkreis 5 zu verdeutlichen. Strom $i_w$ und Spannung $u_w$ im Lastkreis sind in ausgezogenen Linien dargestellt.

Wie aus Fig. 3 ersichtlich, lässt sich der Null-Durchgang des Stromes $i_{Th}$ zum Zeitpunkt $t_3$, der für die Löschzeit $t_3$ bis $t_5$ massgebend ist, nicht unmittelbar durch Messung des Wechselrichterstromes $i_w$ und/oder der Wechselrichterspannung $u_w$ erfassen, weil weder dieser Strom $i_w$ noch diese Spannung $u_w$ zu diesem Zeitpunkt merkante Änderungen, wie einen Null-Durchgang, im Strom- und Spannungsverlauf haben. Dennoch lässt sich nach der Lehre der Erfindung der Zeitpunkt $t_3$ exakt ermitteln. Dieser Lehre liegt der Gedanke zugrunde, dass die Ströme $i_{Th}$, $i_w$ in einem Thyristor einer Diagonalen und im Lastkreis 5 einen linearen Verlauf haben, die Steilheit des Verlaufs des Stromes $i_w$ im Lastkreis aber doppelt so gross ist wie die Steilheit des Verlaufs des Thyristorstromes $i_{Th}$ und schliesslich der Zeitpunkt $t_3$ für den Null-Durch-gang des Thyristors $i_{Th}$ mit dem Ende der Umkommutierung des Stromes $i_w$ im Lastkreis zusammenfällt. Das bedeutet, dass der Zeitpunkt $t_3$ für den Null-Durchgang des Thyristorstromes $i_{Th}$ und damit auch für das Ende der Umkommutierung doppelt so weit vom Zeitpunkt $t_1$ des Beginns der durch den Zündimpuls eingeleiteten Umkommutierung entfernt ist wie der Zeitpunkt $t_2$ des mess-technisch leicht erfassbaren Null-Durchganges des Stromes $i_w$ im Lastkreis 5.

In Anwendung dieses erkannten Zusammenhanges geschieht die Erfassung der Löschzeit $t_3$ bis $t_5$ in der Weise, dass dem Integrator 11 als Startsignal ein von einem Zündimpuls des Zündimpuls-Generators 6 abgeleiteter Impuls über eine Leitung 12 für eine Integration in Richtung negativer Spannung geliefert wird. Diese Integration erfolgt mit konstanter Integrationsgeschwindigkeit. Sobald der Diskriminator 9 zum Zeitpunkt $t_2$ den Null-Durchgang des Stromes $i_w$ im Lastkreis 5 feststellt, erhält der Integrator 11 über eine Leitung 13 einen Impuls zur Umkehrung der Integration in positiver Spannungsrichtung. Der Absolut-Wert der Integrationsgeschwindigkeit wird dabei beibehalten. Diese Integration wird mittels eines über eine Leitung 14 von dem Diskriminator 10 gelie-ferten Impulses $t_5$ gestoppt, wenn der Diskrimina-tor 10 den Null-Durchgang der Spannung $u_w$ am Lastkreis feststellt. Der Null-Durchgang der Spannung des Integrators 11 zum Zeitpunkt $t_3$ ent-spricht wegen der linearen Ab- und Aufintegration exakt dem Null-Durchgang des Stromes $i_{Th}$ im Thyristor, so dass der vom Null-Durchgang $t_3$ bis zum Ende $t_5$ der Integration angewachsene Span-nungswert exakt der tatsächlichen Löschzeit des Thyristors entspricht. Dieses Spannungssignal gelangt dann als Ist-Wert-Signal auf die Löschzeit-Regeleinrichtung 7.

Diese Art der Erfassung der Löschzeit in einer Diagonalen wird entweder von Halbperiode zu Halbperiode oder über mehrere Halbperioden durchgeführt, wobei dann der Mittelwert der ermittelten, einzelnen Ist-Werte gebildet wird, um danach zum Erhalt der als Soll-Wert vorgegebenen Löschzeit eine Änderung der Zündimpuls-Folgefrequenz durchzuführen.

## Patentanspruch

Wechselrichter aus in Brückenschaltung (4) angeordneten Thyristoren mit einem als Parallel-Schwingkreis ausgebildeten Lastkreis (5), bei dem für die Thyristoren eine Löschzeit-Regel-Einrichtung (7) vorgesehen ist, dadurch gekennzeichnet, dass ein Integrator (11) für eine lineare Integration vorgesehen ist, der von dem an die Thyristoren gelieferten Zündsignal einer aufkommutierenden Diagonalen der Brückenschaltung (4) gestartet wird, dessen Integrationsrichtung beim Null-Durchgang des Stromes in dieser Diagonalen umgekehrt wird, wobei der Absolut-Wert der Integrationsgeschwindigkeit beibehalten wird, und dessen Integration beim Null-Durchgang der Spannung der genannten Diagonalen gestoppt wird, und dass der Integrationswert am Ende der Integration der Löschzeit-Regeleinrichtung (7) als Ist-Wert für die Löschzeit zugeführt wird.

## Claim

An inverter comprising thyristors disposed in a bridge circuit (4) with a load circuit (5) in the form a parallel-resonance circuit, in which a deionization-time control device (7) is provided for the thyristors, characterized in that an integrator (11) is provided for a linear integration and is started by the firing signal of a commutating diagonal of the bridge circuit (4) which [firing signal] is delivered to the thyristors and the integration direction of which is inverted in the said diagonal during the zero passage of the current, the absolute value of the integration speed being retained and the integration thereof being stopped during the zero passage of the voltage of the said diagonal, and the integration value at the end of integration is delivered to the deionization-time control device (7) as an actual value for the deionization-time.

## Revendication

Onduleur constitué de thyristors montés en pont (4), avec un circuit de charge (5) constitué par un circuit oscillant parallèle, onduleur dans lequel il est prévu un dispositif de régulation (7) du temps de désamorçage pour les thyristors, onduleur caractérisé en ce qu'il est prévu un intégrateur (11) pour une intégration linéaire, cet intégrateur étant démarré par le signal d'allumage délivré aux thyristors par une diagonale commutante du montage en pont (4), le sens d'intégration de cet intégrateur étant inversé lors du passage par zéro du courant dans cette diagonale, la valeur absolue de la vitesse d'intégration étant maintenue, et l'intégration étant stoppée lors du passage par zéro de la tension de la diagonale précitée, tandis que la valeur d'intégration, à la fin de l'intégration, est appliquée au dispositif de régulation (7) du temps de désamorçage en tant que valeur réelle pour ce temps de désamorçage.

# Fig.1

R
S
T

5

Diskriminator   9

Diskriminator   10

8

5

GR- Impulssteuervorrichtung

WR-Zündimpulsgenerator

1

2

3

4

6

7

11

12

13

14

0 109 522

0 109 522

Fig. 2

Fig. 3

Fig. 4